Europäisches Patentamt

European Patent Office

Office européen des brevets

(11) Numéro de publication: **0 374 006 B1**

# FASCICULE DE BREVET EUROPEEN

(45) Date de publication de fascicule du brevet: **20.07.94**   (51) Int. Cl.⁵: **G02F 1/03**

(21) Numéro de dépôt: **89403379.4**

(22) Date de dépôt: **06.12.89**

(54) **Dispositif de translation de fréquence optique, et modulateur utilisant un tel dispositif.**

(30) Priorité: **16.12.88 FR 8816617**

(43) Date de publication de la demande:
**20.06.90 Bulletin 90/25**

(45) Mention de la délivrance du brevet:
**20.07.94 Bulletin 94/29**

(84) Etats contractants désignés:
**DE FR GB SE**

(56) Documents cités:
**EP-A- 0 211 113**
**GB-A- 2 190 512**
**US-A- 4 761 049**

**IEEE 1987 ULTRASONICS SYMPOSIUM, PRO-
CEEDINGS, vol. 1, 14-16 octobre 1987,Denver,
Colorado, US, pages 471-474; Y. MIYAZAKI et
al.: "Integrated Optical Processors consisting of collinear acousto-optic switches".**

**APPL. PHYS. LETT., vol. 45, no. 5, septembre
1984, pages 490-492; F. HEISMANNet al.: "In-
tegrated-optical frequency translator with
stripe waveguide"**

**C.M. Gee et al., Applied Optics, Vol. 22
(1983), pages 2034-2037**

(73) Titulaire: **THOMSON-CSF**
**173, Boulevard Haussmann**
**F-75008 Paris(FR)**

(72) Inventeur: **Maerfeld, Charles**
**Thomson - CSF**
**SCPI**
**Cedex 67**
**F-92045 Paris La Défense(FR)**
Inventeur: **Desormiere, Bernard**
**Thomson - CSF**
**SCPI Cedex 67**
**F-92045 Paris La Defense(FR)**

(74) Mandataire: **Desperrier, Jean-Louis et al**
**THOMSON-CSF**
**SCPI**
**B.P. 329**
**50, rue Jean-Pierre Timbaud**
**F-92402 Courbevoie Cédex (FR)**

## Description

La présente invention se rapporte aux dispositifs qui permettent de modifier la fréquence d'une onde lumineuse. Elle concerne également les modulateurs qui utilisent un tel dispositif pour moduler une onde lumineuse utilisée comme une porteuse.

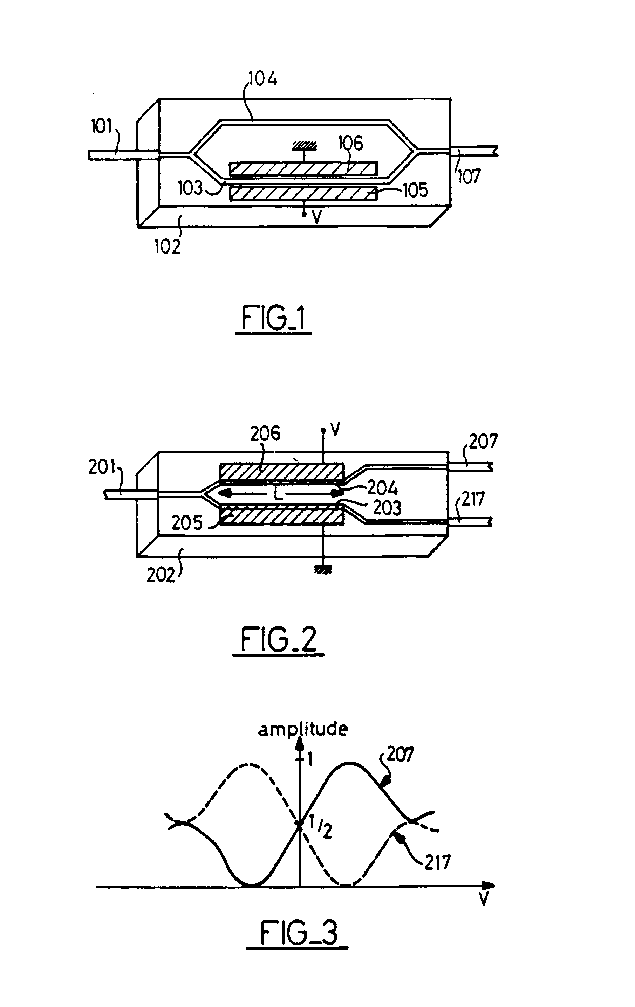

On connait des modulateurs électrooptiques réalisés en optique intégrée qui permettent de moduler un signal lumineux en amplitude à partir d'un signal électrique de modulation . Dans un tel modulateur, connu notamment d'un article de C.M. Gee et al, publié dans Applied Optics, 22 (1983), pages 2034-2037, représenté schématiquement sur la figure 1, le signal lumineux à moduler arrive par une fibre 101 sur un circuit optique intégré sur la surface d'un substrat 102. Ce circuit optique comprend un interféromètre du type Mach-Zehnder qui comporte deux bras 103 et 104 dans lesquels se partage le signal lumineux et qui ne sont pas couplés entre eux. Deux électrodes 105 et 106 s'étendent sur la surface du substrat le long de l'un des bras de l'interféromètre. La signal électrique de modulation V est appliqué aux bornes d'alimentation de ces électrodes. La substrat étant réalisé en un matériau électrooptique, tel que du niobate de lithium par exemple, l'indice du bras entouré par les électrodes varie par effet Pockels. De cette manière, a l'endroit où les deux bras se réunissent, le signal ayant traversé le bras soumis à l'action des électrodes est déphasé par rapport au signal ayant traversé l'autre bras et l'intensité du signal résultant de la somme de ces deux signaux dépend de la valeur de ce déphasage. On obtient ainsi une modulation en amplitude de l'intensité optique du signal à la sortie du circuit intégré. Dans certaines circonstances la porteuse disparait et l'on n'a plus que les deux raies latérales, ce qui correspond à une translation de la fréquence du signal optique d'entrée avec augmentation et diminution simultanée de cette fréquence symétriquement par rapport à la fréquence initiale. Ce signal est alors repris par une fibre optique de sortie 107 pour être utilisé de la manière souhaitée.

On connait également des modulateurs optiques d'amplitude, tels que représentés sur la figure 2, dans lesquels le signal optique arrive lui aussi par une fibre d'entrée 201 sur un circuit intégré à la surface d'un substrat électrooptique 202. Dans ces modulateurs le signal optique se répartit là aussi dans deux guides 204 et 203, mais ceux-ci sont rapprochés, sur une longueur L, d'une distance égale à quelques longueurs d'onde. De cette manière on obtient sur cette distance un couplage optique entre les guides. Ceux-ci s'éloignent ensuite l'un de l'autre pour ne plus être couplés, et ils excitent deux fibres de sortie 207 et 217. Deux électrodes 205 et 206 s'étendent respectivement le long des deux bras 203 et 204 en les recouvrant. Ceci permet de modifier les indices optiques de ces guides par effet électrooptique lorsqu'on applique une tension V aux bornes des connexions alimentant ces électrodes. Dans un tel montage l'indice de l'un des guides augmente tandis que celui de l'autre diminue et vice versa en fonction de la polarité de la tension appliquée. Pour ce dispositif, appelé "coupleur Y", on définit une longueur caractéristique du couplage entre les deux guides, appelée $L_c$, d'autant plus courte que le couplage est fort. Si la longueur L du coupleur est telle que

$$L = \frac{L_c}{\sqrt{2}}$$

on obtient sur les fibres de sorties 207 et 217 une intensité lumineuse qui varie à peu près sinusoïdalement en fonction de la tension V, comme représenté sur le graphique de la figure 3. En faisant alors varier la tension V de manière à rester dans la partie centrale. sensiblement rectiligne de ce graphique, on peut donc moduler en amplitude la lumière appliquée par la fibre d'entrée 201. Les signaux de sortie sur les fibres de sortie 207 et 217 sont complémentaires l'un de l'autre.

On remarque que ces dispositifs permettent seulement de faire de la modulation en amplitude sans modifier la fréquence des signaux lumineux. On obtient dans ce cas des bandes latérales symétriques dues à la modulation, ce qui ne correspond nullement à une translation de fréquence.

Yasumitsu Miyazaki et Nobuo Goto ont proposé dans 1987 ULTRASONICS SYMPOSIUM, publié dans la revue IEEE sous la référence 0090-5607/87/0000-0471, un dispositif acoustooptique permettant de commuter des signaux optiques de manière sélective en fonction de la fréquence. Ce dispositif permet d'obtenir un certain effet de translation optique donnant l'équivalent d'une modulation BLU. Toutefois ce dispositif, dans lequel la translation de fréquence est obtenue par modulation de l'indice sous l'effet des ondes acoustiques, est limité en fréquence et sa réalisation est d'une technologie délicate à mettre en oeuvre.

Pour permettre d'obtenir une véritable translation optique, l'invention propose un dispositif de translation optique de fréquence optique, selon la revendication 1.

D'autres particularités et avantages de l'invention apparaîtront clairement dans la description suivante faite à titre d'exemple non limitatif en regard de figures annexées qui représentent :
- les figures 1 et 2 des modulateurs électrooptiques selon l'art connu ;

- la figure 3, des courbes de signaux dans le modulateur de la figure 2 ;
- la figure 4, un modulateur selon l'invention ;
- les figures 5 et 6, des graphiques de nombre d'onde dans la section 2 du modulateur de la figure 4 ;
- les figures 7 à 11, des variantes de réalisation de modulateurs selon l'invention ;
- la figure 12, le schéma d'une liaison optique utilisant un modulateur selon l'invention ; et
- la figure 13, un modulateur double selon l'invention.

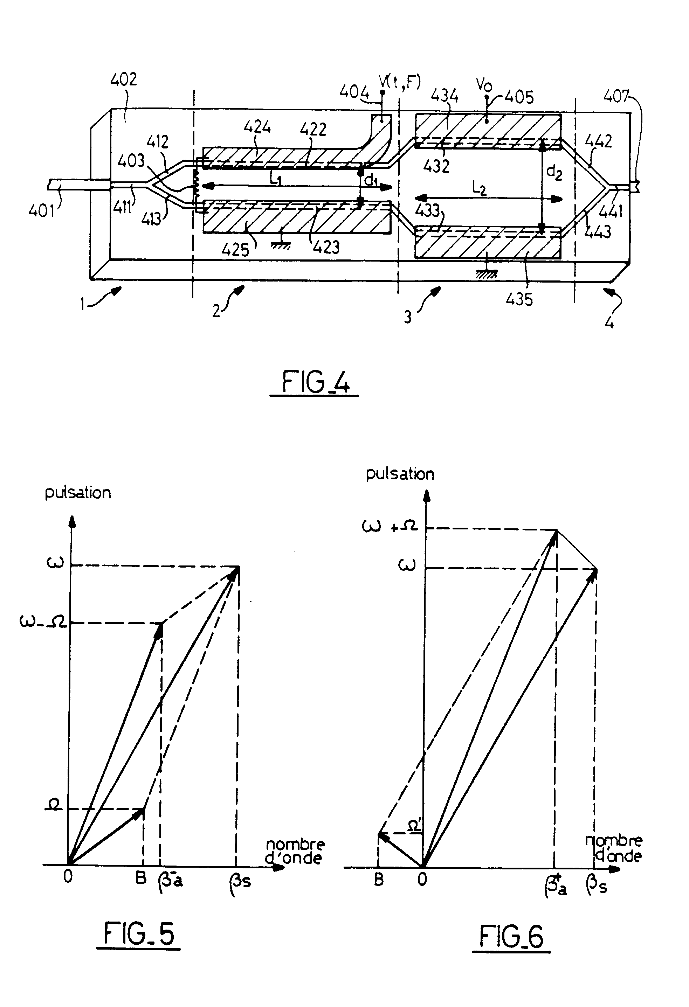

Le dispositif selon l'invention représenté en figure 4 comporte un substrat 402 en matériau électrooptique, tel que du niobate de lithium par exemple,à la surface duquel sont intégrés un circuit optique et des électrodes de commande. Ces éléments intégrés peuvent être répartis en quatre sections principales numérotées de 1 à 4, correspondant à autant de fonctions distinctes.

La section 1 comprend une jonction symétrique d'entrée formée d'un guide optique 411 qui se divise en deux branches 412 et 413. Cette jonction symétrique permet de répartir de manière égale dans les deux branches 412 et 413 le flux optique incident arrivant par la fibre optique d'entrée 401, elle-même couplée au guide 411 .

La section 2 comprend deux guides optiques 422 et 423 parallèles sur une distance $L_1$ et séparés d'une distance $d_1$. Les bras 412 et 413 de la jonction d'entrée sont reliés aux guides 422 et 423, ce qui permet d'exciter le mode symétrique de la structure formée par ces deux guides. Il est connu en effet que dans une telle structure peuvent se propager deux modes propres, le mode symétrique et le mode antisymétrique. Ce terme connu dans la technique considérée, tire son origine de l'oscillation des pendules. Quand ceux-ci oscillent ensemble et en phase, leur mouvement est symétrique. Quand ils oscillent à contretemps et donc en opposition de phase, leur mouvement est antisymétrique. Il y a donc équivalence entre symétrique et en phase, et anti-symétrique et en opposition de phase, mais en terme de modes les premières expressions sont plus parlantes. En l'absence d'autres phénomènes, en particuler de dissymétries et d'effets électrooptiques, seul le mode symétrique se propage sans exciter le mode antisymétrique.

Deux électrodes conductrices 424 et 425, métalliques par exemple, s'étendent au-dessus des deux guides 422 et 423 le long de la distance $L_1$. Ces électrodes sont en forme de rubans dont la largeur et l'épaisseur, ainsi que la distance qui les sépare, sont telles qu'elles forment une ligne de propagation électrique possédant une impédance caractéristique déterminée, par exemple 50 Ohms. Cette ligne est bouclée à l'une de ses extrémités, celle où arrive l'énergie optique dans les guides sur la figure, par une résistance 403 dont la valeur est égale celle de l'impédance caractéristique de la ligne. Elle est excitée à l'autre extrémité par une tension électrique V(t,F) qui sur cet exemple de réalisation est appliquée par une connexion 404 sur l'une des électrodes et par la masse sur l'autre électrode.

Sous l'effet de la tension ainsi appliquée et de l'effet électrooptique induit dans le substrat par celle-ci, il se produit un couplage entre les deux modes le long des guides. Ce couplage se traduit par un transfert d'énergie du mode symétrique vers le mode antisymétrique, qui est plus ou moins accentué selon la longueur d'interaction et la valeur de la tension.

Selon l'invention les deux électrodes 424 et 425, bouclées sur leur impédance caractéristique 403, forment une ligne de propagation dans laquelle se développe une onde progressive excitée par la tension V(t,F) dont la fréquence est de préférence élevée, de l'ordre de 10 GHz par exemple. Cette onde progressive peut être contraprogressive comme dans l'exemple représenté, c'est-à-dire que l'onde électromagnétique se déplace dans le sens inverse de l'onde lumineuse, ou coprogressive lorsque l'on interchange la position de l'impédance de sortie et des connexions d'alimentation.

Selon la conversion de mode s'accompagne d'une translation de fréquence optique égale à la fréquence de l'onde électromagnétique. On obtient donc en sortie des deux guides 422 et 423, qui s'éloignent l'un de l'autre au bout de la distance $L_1$ de façon à ce qu'il n'y ait plus de couplage à partir de cette distance, des ondes lumineuses décalées en fréquence par rapport à l'onde incidente et déphasées l'une par rapport à l'autre, ce déphasage étant égal à $\Pi$ si la transformation du mode symétrique en mode antisymétrique est complète.

Ces deux sorties se raccordent dans la section 3 à deux guides optiques 432 et 433 parallèles entre eux sur une distance $L_2$ et séparés d'une distance $d_2$ suffisante pour que ces guides ne soient pas couplés entre eux.

Deux électrodes 434 et 435 s'étendent sur toute la longueur de ces guides. Une tension électrique continue $V_0$ est appliquée à ces électrodes par l'intermédiaire d une connexion 405 reliée à l'une des électrodes et d'une connexion de masse reliée à l'autre. De cette manière l'indice du substrat varie au niveau des guides dans des sens contraires de façon à obtenir entre les deux ondes lumineuses qui se propagent respectivement dans chaque guide un déphasage qui vient compenser le déphasage existant entre ces deux ondes lumineuses à la sortie de la section 2 provenant du passage du mode symétrique au mode antisymétrique, ce qui revient à repasser du mode antisymétrique au mode symétrique.

Les sorties des guides 432 et 433 sont reliées dans une section 4 à deux bras 442 et 443 qui viennent converger en un point commun pour former un guide de sortie 441. Cette section, qui est une jonction symétrique de sortie semblable à la jonction 1 mais fonctionnant en sens inverse, permet de faire la somme des ondes lumineuses ayant progressé séparément dans les sections 2 et 3 et remises en phase à la sortie de la section 3.

Une fibre optique 407 permet de recueillir l'énergie lumineuse sortant du guide 441 et de l'appliquer aux circuits d'utilisation.

On remarque que dans l'exemple de réalisation ainsi décrit la polarisation est identique dans les deux guides et peut être soit TM soit TE selon l'orientation cristallographique du substrat 402 et la géométrie des électrodes.

Dès que l'on a une onde progressive le long de la ligne électromagnétique produisant un couplage fini, on a une conversion plus ou moins complète du mode symétrique en mode antisymétrique et donc apparition d'une translation de fréquence sur l'onde lumineuse antisymétrique. Le rendement du dispositif est bien entendu d'autant meilleur que la conversion est plus complète et il est maximum lorsque le mode symétrique en sortie de la section 2 a disparu, ne laissant plus que le mode antisymétrique.

Ceci se produit lorsque l'on a dans la section 2 une interaction spatialement stationnaire, dans laquelle on a annulation de la dépendance spatiale du couplage des deux modes en fonction de la distance.

Cette condition s'exprime par une relation entre les constantes de propagation, ou nombres d'ondes $\frac{2\pi}{\lambda}$ , des trois ondes en présence :
- l'onde optique en mode symétrique dont le nombre d'onde est $\beta_s$ ;
- l'onde optique en mode antisymétrique en l'absence d'onde électromagnétique, dont le nombre d'onde est $\beta_a$ ;
- l'onde électromagnétique dont le nombre d'onde est B.

Cette relation s'écrit, le signe + étant à prendre si l'onde électromagnétique est contraprogressive, et le signe - si elle est coprogressive :

$$\beta_s - \beta_a^{\pm} - B = 0 \text{ ou}$$

$$\beta_a^{\pm} = \frac{\omega \pm \Omega}{\omega} \beta_a$$

Dans cette formule la fréquence $\nu$ de l'onde optique incidente est donnée par $\omega = 2\pi\nu$ et la fréquence F de l'onde électromagnétique donnée

par $\Omega = 2\pi F$.

Cette condition est représentée vectoriellement dans les figures 5 et 6 où la figure 5 correspond à une onde coprogressive et la figure 6 à une onde contraprogressive.

Les nombres d'onde $\beta_s$ et $\beta_a$ sont eux-mêmes obtenus à partir du nombre d'onde $\beta$ qui est celui de l'onde lumineuse en l'absence de couplage optique.

En présence de couplage optique on a $\beta_s = \beta + k$ et $\beta_a = \beta - k$. k est un paramètre de couplage qui exprime en quelque sorte la "force" du couplage entre les deux guides. Ce paramètre k est fonction de la distance $d_1$ entre les guides et en première approximation il est proportionnel à

$$\exp\left[\frac{-d_1}{d_0}\right]$$

où $d_0$ est fixé de manière connue par les caractéristiques des guides.

On déduit donc de ces relations que $\beta_s - \beta_a = 2k$.

On montre aussi que la longueur de couplage $L_c$, mentionnée précédemment, s'écrit : $L_c = \frac{\pi}{2k}$

On voit donc qu'elle correspond à un déphasage spatial de $\pi$ entre les deux modes, puisque $(\beta_s - \beta_a) L_c = \pi$.

En exprimant les nombres d'onde en fonction de la fréquence et de la vitesse de l'onde dans le milieu considéré l'égalité vue précédemment s'écrit ( $c_0$ étant la vitesse des ondes électromagnétiques dont le vide, n l'indice des ondes optiques non guidées dans le milieu considéré et N l'indice équivalent de l'onde hyperfréquence dans le guide) :

$$F = \frac{c_0 \, k \, (d_1)}{\pi \, (N \pm n)}$$

Dans cette formule + est pour l'onde contraprogressive et - pour l'onde coprogressive.

Cette formule permet donc de déterminer soit la distance $d_1$ entre les guides de la section 2 pour obtenir une translation de fréquence F, soit la translation de fréquence F que l'on peut obtenir pour une structure déterminée où $d_1$ a une valeur elle-même déterminée.

Dans ce dernier cas où la structure est déterminée, on constate que la fréquence F, et donc la pulsation $\Omega$ , sont plus petites pour une onde contraprogressive que pour une onde coprogressive.

A titre d'exemple numérique, pour un substrat en niobate de lithium de coupe Z, avec une propagation dans le mode TM, on a n = 2,12 et N = 4,25. Pour une fréquence F = 10 GHz l'intervalle nécessaire entre les bords internes des deux guides est d'environ 3 micromètres, ce qui est une valeur tout à fait réalisable avec les technologies connues à ce jour.

L'énergie lumineuse est répartie, aussi bien en sortie de la section 2 que de la section 3, entre les modes symétrique et antisymétrique et seul le mode antisymétrique a subi la translation de fréquence. Il est donc souhaitable, pour avoir un rendement maximum, que la conversion du mode symétrique en mode antisymétrique soit la plus complète possible aussi bien dans la section 2 que dans la section 3. Lorsque cette conversion est complète on dit qu'il y a transfert total entre les modes.

Pour qu'il y ait un tel transfert total il faut que le déphasage entre l'entrée et la sortie de chacune de ces sections soit dans la pratique égal à ¶, ompte tenu des dimensions obtenues.

Le déphasage le long de chaque section est égal à $\frac{2\Pi}{\lambda}$ $\Delta n$ L = $\beta$ $\Delta n$ L où L est la longueur d'interaction, c'est-à-dire $L_1$ ou $L_2$, et $\Delta n$ la variation de l'indice optique du matériau du substrat sous l'effet du champ électrique appliqué par les électrodes.

Dans l'exemple représenté où les deux électrodes sont superposées sur les deux guides, le champ électrique est vertical et noté $E_3$ suivant les notations courantes. La valeur de n est alors donnée par la relation connue $\Delta$ n = $n^3 R_{33} E_3 A$ dans laquelle $R_{33}$ est le coefficient électrooptique mis en jeu, en fonction notamment de l'orientation du cristal et, A un coefficient représentant l'intégrale normalisée du flux du produit des champs optique et électromagnétique à travers une section transversale pour un guide unique non couplé.

On constate donc que la condition de transfert total met en jeu les deux paramètres L et $E_3$. La valeur de $E_3$ est déterminée pour la section 2 par l'amplitude crête du champ électrique provenant du signal V(t,F) et pour la section 3 par la valeur de la tension constante $V_0$. Il est clair que si l'on rend égales les valeurs de ces deux champs, les longueurs $L_1$ et $L_2$ seront égales.

A titre d'exemple numérique pour un champ $E_3$ = $10^5$ V/m, un coefficient A = 1, un indice n = 2,12, un coefficient $R_{33}$ = 30.$10^{-12}$m/V et un nombre d'onde $\beta$ = 2.$10^6$ rd/m la longueur L est égale à 3 cm ce qui est une valeur tout à fait réalisable avec les technologies courantes.

Bien entendu le niveau du signal en sortie est maximal à une fréquence F déterminée quand les deux conditions ci-dessus (condition de stationarité et condition de transfert total) sont satisfaites. Lorsque la fréquence F varie par exemple parce qu'elle est modulée d'une manière quelconque, le niveau du signal baisse, ce qui détermine comme pour tout dispositif, une bande passante $\Delta$ F.

La bande passante à mi-hauteur est donnée par la formule :

$$\Delta F = 0,8 \frac{C_0}{(N \pm n)L}$$

Dans l'exemple numérique correspondant aux valeurs données ci-dessus, on obtient 3,7 GHz pour une onde contraprogressive.

Dans l'exemple de réalisation ainsi décrit la section 3 réalise un déphasage de ¶ entre les ondes optiques circulant sur les deux guides 432 et 433.

Suivant une variante de réalisation, on effectue une séparation spatiale des modes symétrique et antisymétrique dont l'opposition de phase n'est alors plus gênante.

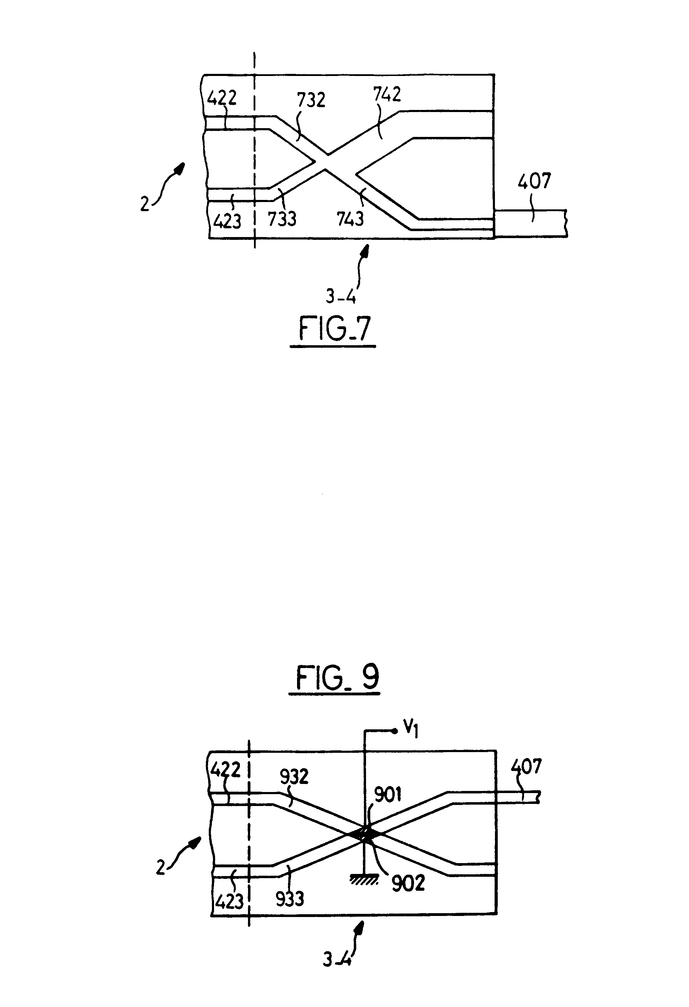

Pour cela on utilise une jonction asymétrique à deux sorties de largeurs différentes dans laquelle le mode symétrique émerge du guide le plus large. On a représenté sur la figure 7 les sections 3 et 4 d'un tel dispositif. Les guides optiques intégrés 732 et 733 qui sont connectés aux guides intégrés 422 et 423 de la section 2 , se rapprochent pour se réunir et repartir sous la forme des guides 742 et 743 avec lesquels ils forment un X. La branche 742 de cet X est plus large que la branche 743. C'est de cette branche étroite 743 que sort, de manière connue, le mode antisymétrique qui est recueilli par la fibre optique de sortie 407.

Un autre moyen consiste à agir sur la fabrication des guides optiques. Ceux-ci sont réalisés habituellement par diffusion d'un matériau tel que le titane sur la surface du substrat. Le déphasage de la section 3 peut alors être obtenu en agissant sur l'épaisseur de la couche de titane ou sur sa largeur. De même on peut utiliser une couche diélectrique déposée sur la surface du substrat, sur l'un des guides ou à proximité immédiate de celui-ci, car on sait qu'une telle couche modifie les paramètres du guide. Il est alors facile d'ajuster ces paramètres en faisant une ablation sélective de cette couche, avec un laser par exemple.

On peut aussi utiliser un dispositif connu sous le nom de "X switch" . Ce dispositif, représenté sur la figure 9, consiste à faire croiser les guides 932 et 933, réunis aux guides 422 et 423, en un point 901. On place au-dessus et en-dessous de ce point de croisement des électrodes 901 et 902 reliées l'une à la masse et l'autre à une tension de commande $V_1$. Dans ces conditions, et pour une valeur adéquate de $V_1$, déterminée d'une manière connue, le mode symétrique émerge d'un seul de ces guides et est recueilli par la fibre optique de sortie 407.

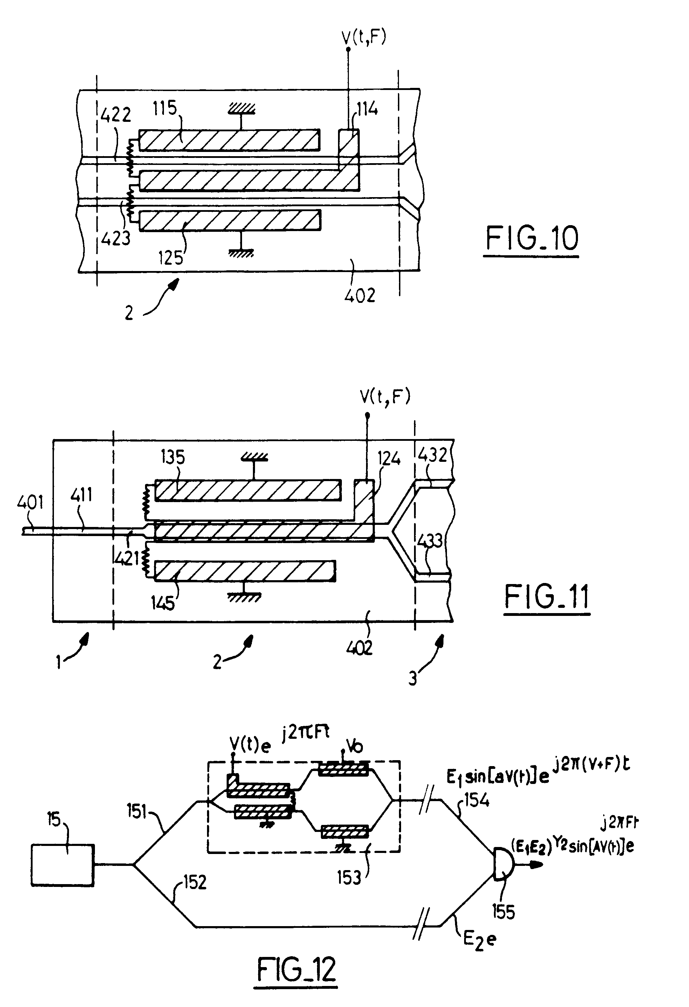

Tous les modes de réalisation décrits ci-dessus correspondaient à une coupe Z du cristal électrooptique, c'est-à-dire à une coupe où l'axe C est perpendiculaire à la surface, et à un mode de propagation TM de l'onde optique, c'est-à-dire un mode où le champ électrique est perpendiculaire à cette surface. Ceci permet d'utiliser le coefficient électrooptique $R_{33}$ dont la valeur est la plus élevée. D'autres combinaisons de coupes du cristal et de modes de transmission de l'onde optique peuvent être utilisés, qui permettent pour certaines d'utiliser également ce même coefficient $R_{33}$. C'est en particulier le cas pour une coupe X ou Y et un mode TE. Pour agir alors sur ce mode TE il est nécessaire que le champ électrique soit appliqué horizontalement par rapport à la surface du cristal, en utilisant par exemple, comme sur la figure 10, trois électrodes. Sur cette figure 10, où l'on n'a représenté que la section centrale 2, l'électrode de commande 114 reliée à la tension V(t,F) est située entre les deux guides 422 et 423, et il y a deux électrodes 115 et 125 réunies à la masse situées de part et d'autre de ces deux guides 422 et 423, ce qui permet d'obtenir au niveau des guides un champ électrique parallèle à la surface du substrat 402 au même niveau des guides.

Il est possible dans une autre variante de n'utiliser qu'un seul guide dans la section 2, comme représenté sur la figure 11. En effet on sait faire fonctionner un guide optique de manière bimode, c'est-à-dire avec les deux modes qui se propagent simultanément et séparément dans ce guide. On peut alors par effet électrooptique obtenir un passage symétrique/antisymétrique entre les deux modes de propagation, ce qui permet, en respectant les conditions vues plus haut, d'obtenir une translation de fréquence.

Pour cela on utilise, comme dans la figure 11, un guide unique 421 qui est alors excité directement par un guide unique 411 de la section 1, lui-même alimenté par une fibre optique d'entrée 401. En fait la section 1 se réduit à sa plus simple expression. Pour appliquer le signal hyperfréquence, on utilise une électrode centrale unique 124 qui s'étend sur la surface du guide et qui est alimentée par le signal V(t,F). Pour que le champ électrique soit appliqué bien symétriquement sur le guide, deux électrodes 135 et 145 reliées à la masse entourent l'électrode centrale 124. Cette disposition est à bien distinguer de celle de la figure 10, qui lui ressemble, en ce que le guide 421 passe bien en-dessous de l'électrode 124 et que le champ appliqué à ce guide est bien perpendiculaire à la surface du substrat 402, la présence des deux électrodes 135 et 145 étant destinée simplement à assurer une symétrie de ce champ, alors que dans la figure 10 les guides 422 et 423 ne sont pas recouverts par les électrodes et que le champ électrique y est bien horizontal.

Le guide 421 en sortie de la section 2 se divise alors en deux branches pour alimenter les guides 432 et 433 de la section 3.

Dans un tel cas la fréquence de fonctionnement F est fixée, puisque la distance d est intrinsèque au guide qui est unique. Cette distance d étant très petite, la valeur du coefficient k est très grande et il en est de même pour la fréquence F.

On peut ajuster cette fréquence en agissant comme vu plus haut sur différents paramètres de réalisation du guide et notamment en utilisant la technique connue d'échange protonique.

Un autre mode de réalisation d'un guide unique bimode consiste à utiliser simultanément les deux modes TE et TM. Dans le guide on a un couplage électrooptique progressif entre les modes TE et TM. La relation de stationarité s'écrit $\beta^+_{TE} - \beta_{TM} + B = 0$. La différence des indices correspondants aux modes TE, TM est trop grande et pour faire varier les indices, on combine 2 techniques, la diffusion de titane et l'échange protonique, pour que la relation de stationarité soit satisfaite à la fréquence désirée.

Cette technique est notamment décrite dans un article publié par M. de MICHELI et col. dans la revue "Optics Communication", vol. 42, N° 2, pages 101-103, 15 juin 1982, sous le titre "Fabrication and Characterization of Titanium in diffused proton exchanged (TIPE) waveguides in Lithium Niobate".

Un dispositif de modulation comme décrit ci-dessus permet par exemple de transmettre un signal V(t) par hétérodynage entre deux signaux optiques, comme représenté sur la figure 12. Pour cela on part d'une source laser 150 qui émet un signal lumineux sensiblement monochromatique $E_0$ à la fréquence $\nu$. Ce signal est partagé en deux pour exciter de manière égale deux fibres optiques 151 et 152. La fibre optique 151 est connectée à un modulateur 153 selon l'invention qui reçoit un signal de modulation $V(t)e^{j2\pi t}$. Le signal ainsi modulé est repris par une fibre optique de sortie 154 qui l'amène à une photodiode de réception 155. Cette photodiode reçoit également le signal provenant de la fibre optique 152 qui forme signal de référence et vient battre avec le signal déplacé en fréquence dans le modulateur 153. Le signal électrique en sortie de la diode 155 est donc proportionnel à la modulation V(t).

Un avantage de ce dispositif de transmission est que le signal utile se propageant sur la fibre 154 se situe en dehors de la raie principale de la source laser, puisque la fréquence F de modulation est supérieure à la largeur de bande B de l'oscillateur laser du fait que la translation de fréquence optique est grande selon l'invention.

Un tel modulateur peut aussi servir à distribuer par voie optique les oscillateurs hyperfréquences dans les antennes radar à balayage électronique ou à réaliser une batterie de canaux décalés en fréquence à partir d'un laser unique pour réaliser des systèmes cohérents à multiplexage de fréquence dans les transmissions par fibres optiques utilisées dans les réseaux à très grande capacité.

On remarque aussi qu'une telle translation de fréquence correspond en fait à une modulation du type BLU. Ce dispositif peut donc être considéré comme un modulateur de type BLU particulièrement performant puisque l'écart de fréquence peut atteindre 10 GHz.

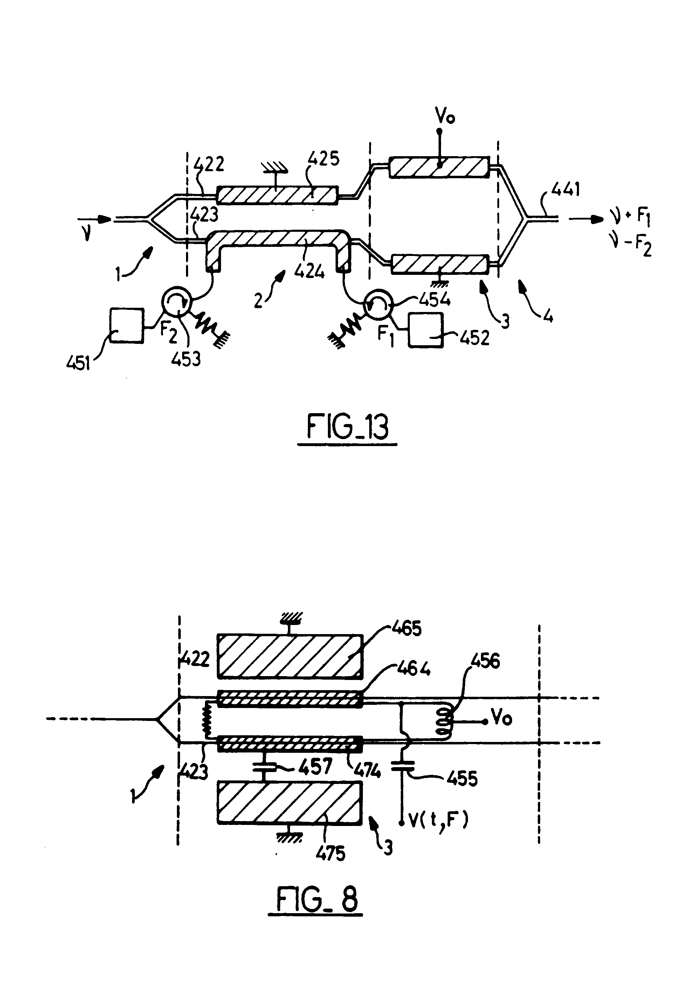

Dans une autre variante de réalisation, représentée schématiquement sur la figure 13, on alimente l'électrode 424 avec deux oscillateurs hyperfréquence 451 et 452 réunis respectivement par des circulateurs 453 et 454 aux deux extrémités de cette électrode. Comme la fréquence de translation est différente selon le sens de propagation de l'onde électromagnétique par rapport à l'onde électrooptique, on peut donc utiliser pour l'un des générateurs hyperfréquence une fréquence $F_1$ correspondant à l'onde contraprogressive et pour l'autre une fréquence $F_2$ correspondant à l'onde coprogressive. De cette manière on obtient en sortie deux ondes lumineuses l'une à la fréquence $\nu + F_1$ et l'autre à la fréquence $\nu - F_2$. Le rapport de décalage en fréquence est égal à

$$\frac{N + n}{N - n}$$

et dans les exemples numériques décrits plus haut il est sensiblement égal à 3. On peut toutefois diminuer ce rapport en utilisant pour le substrat une structure stratifiée comportant par exemple une couche amincie de niobate déposée sur du $SiO_2$ ce qui réduit l'indice N.

Un tel dispositif permet de transmettre deux oscillateurs avec un dispositif unique ou deux canaux en FDM-BLU. Les deux translations peuvent également être séquencées dans le temps pour faire de l'échométrie cohérente par battement des deux échos après les avoir remis en coïncidence dans le temps à l'aide d'un retard différentiel de propagation. L'intérêt de ce dispositif est alors d'avoir une bande passante relative très élevée.

Il est également possible d'accorder en fréquence le dispositif selon l'invention en utilisant la variante de réalisation représentée sur la figure 8.

Dans cette variante les guides 422 et 423 sont recouverts respectivement par des électrodes distinctes 464 et 474 et deux électrodes 465 et 475 réunies à la masse s'étendent de chaque côté de ces électrodes centrales. Les électrodes centrales 464 et 474 sont alimentées avec une tension $V_0$ par l'intermédiaire d'une inductance d'arrêt 456 qui permet d'éviter le passage des signaux hyperfréquences qui sont appliqués comme on le verra plus loin.

De cette manière en faisant varier $V_0$ on fait varier le paramètre de couplage k entre les deux guides et donc la fréquence de fonctionnement.

Le signal hyperfréquence de translation V(t,F) est alors appliqué sur l'électrode 464 par l'intermédiaire d'un condensateur de liaison 455 qui permet d'éviter de court-circuiter la tension continue $V_0$ ; l'inductance d'arrêt 456 permet d'éviter d'envoyer la tension hyperfréquence sur le générateur de tension continue. Un condensateur 457 permet de porter les électrodes 474 et 475 au même potentiel microonde en les découplant au point de vue continu.

Les modulateurs selon l'invention ainsi décrits dans leurs différentes variantes ont pour avantage principal d'être à bande latérale unique, ce qui permet d'éviter les inconvénients dus à la fréquence image des modulateurs optiques connus qui sont à double bande.

Par ailleurs dans le domaine de l'optique guidée ces dispositifs sont les seuls permettant de produire efficacement une translation de fréquence très élevée appartenant notamment au domaine microonde.

**Revendications**

1. Dispositif de translation optique de fréquence optique, qui comprend, intégrés sur un substrat (402) en matériau électrooptique, deux guides de transmission optique (422, 423) sensiblement parallèles sur une longueur L1 et séparés d'une distance d1, des moyens (411-413) pour injecter dans ces deux guides dans le mode symétrique une onde optique de départ de fréquence $\nu$ et au moins deux électrodes (424, 425) s'étendant le long des guides sur la distance L1 pour former une ligne de propagation hyperfréquence bouclée par une impédance caractéristique (403) et pouvant être alimentée par un signal hyperfréquence à une fréquence F, caractérisé en ce que la valeur de d1 permet un couplage optique entre les deux guides (422, 423) et que les valeurs de L1, d1 et F permettent un passage de l'onde optique transmise du mode symétrique au mode antisymétrique avec une translation de fréquence de l'onde optique dans le mode antisymétrique pour que cette onde optique ait une fréquence égale à une seule des deux valeurs $\nu$ + F ou $\nu$ - F, et en ce que le dispositif comprend en outre des moyens (432, 435) pour convertir ensuite le mode antisymétrique de l'onde optique décalée en fréquence en un mode symétrique, palliant ainsi les effets de l'opposition de phase entre les ondes se propageant dans les deux guides pour pouvoir obtenir en sortie un signal optique présentant une fréquence égale à une seule des deux valeurs $\nu$ + F ou $\nu$ - F.

2. Dispositif selon la revendication 1, caractérisé en ce qu'il ne comporte que deux électrodes (424,425) et que celles-ci s'étendent au-dessus des guides sur la distance $L_1$ pour appliquer à ceux-ci un champ électrique perpendiculaire à la surface du substrat.

3. Dispositif selon la revendication 1, caractérisé en ce qu'il comprend 3 électrodes dont l'une (114) est placée sur la surface du substrat entre les deux guides(422, 423) et les deux autres (115, 125) sont situés respectivement de part et d'autre des deux guides (422,423) de manière à appliquer à ces guides un champ électrique transversal.

4. Dispositif selon la revendication 1 caractérisé en ce que les deux guides sont confondus en un seul guide fonctionnant de manière bimode et qui comprend une électrode centrale (124) déposée sur ce guide bimode et deux électrodes latérales (135, 145) déposées de part et d'autre de ce guide pour appliquer au guide un champ électrique perpendiculaire à la surface du substrat (402) qui permet d'obtenir un passage symétrique/antisymétrique entre les deux modes de propagation à l'intérieur du guide.

5. Dispositif selon l'une quelconque des revendications 1 à 4, caractérisé en ce que les moyens pour convertir ensuite le mode antisymétrique en mode symétrique comprennent deux guides de transmission optique (432, 433) sensiblement parallèles sur une longueur $L_2$ et séparés par une distance $D_2$ ne permettant pas le couplage des deux guides et deux électrodes (434, 435) s'étendant à la surface de ces guides et pouvant être alimentées par une tension électrique continue $V_0$ permettant d'appliquer aux guides un champ électrique perpendiculaire à la surface du substrat (402).

6. Dispositif selon l'une quelconque des revendications 1 à 4, caractérisé en ce que les moyens pour convertir ensuite le mode antisymétrique en mode symétrique comprennent une jonction asymétrique à deux sorties de largeur différente (742, 743) dans laquelle le mode antisymétrique émerge du guide le plus étroit.

7. Dispositif selon l'une quelconque des revendications 1 à 4, caractérisé en ce que les moyens pour convertir ensuite le mode antisymétrique en mode symétrique comprennent deux guides croisés en forme d'X (932, 933) et deux électrodes (901, 902) situées sur ce point de croisement pour recevoir une tension de commande $V_1$ qui permet de diriger le mode symétrique dans un seul de ces guides (933).

8. Dispositif selon l'une quelconque des revendications 1 à 7, caractérisé en ce qu'il comprend des moyens (451-454) connectés à chaque extrémité de la ligne de propagation hyperfréquence formée par les électrodes déposées sur le substrat (424, 425) pour alimenter cette ligne par une onde contraprogressive et/ou une onde coprogressive.

9. Dispositif selon l'une quelconque des revendication 1 à 7, caractérisé en ce qu'il comprend des moyens (455-457) pour alimenter les électrodes (464, 465, 474, 475) simultanément par le signal hyperfréquence à la fréquence F et par une tension électrique continue $V_0$ permettant de faire varier le couplage entre les deux guides et par conséquent la fréquence de fonctionnement du dispositif.

10. Modulateur optique à bande latérale unique, qui comprend un dispositif (153) selon l'une quelconque des revendications 1 à 9.

## Claims

1. Optical frequency optical translation device, which comprises, integrated on a substrate (402) made from an electrooptic material, two optical transmission guides (422, 423) which are substantially parallel over a length L1 and are separated by a distance d1, means (411-413) for injecting an optical start wave of frequency $\nu$ into these two guides in the symmetric mode and at least two electrodes (424, 425) extending along the guides over the distance L1 to form a microwave propagation line looped through a characteristic impedance (403) and capable of being supplied with a microwave signal at a frequency F, characterized in that the value of d1 allows optical coupling between the two guides (422, 423) and that the values of L1, d1 and F allow a switching of the transmitted optical wave from the symmetric mode to the antisymmetric mode with a frequency translation of the optical wave in the antisymmetric mode so that this optical wave has a frequency equal to just one of the two values $\nu$ + F or $\nu$ - F, and in that the device furthermore comprises means (432, 435) for later converting the antisymmetric mode of the frequency-shifted optical wave into a symmetric mode, thereby alleviating the effects of the phase opposition between the waves propagating in the two guides so as to be able to obtain at output an optical signal exhibiting a frequency equal to just one of the two values $\nu$ + F or $\nu$ - F.

2. Device according to Claim 1, characterized in that it includes two electrodes (424, 425) only and that the latter extend above the guides over the distance $L_1$, so as to apply to the guides an electric field perpendicular to the surface of the substrate.

3. Device according to Claim 1, characterized in that it comprises 3 electrodes, one (114) of which is placed on the surface of the substrate between the two guides (422, 423) and the other two (115, 125) of which are situated on either side of the two guides (422, 423) respectively so as to apply to these guides a transverse electric field.

4. Device according to Claim 1, characterized in that the two guides are merged into a single guide operating in a bimodal manner and which comprises a central electrode (124) deposited on this bimodal guide and two lateral electrodes (135, 145) deposited on either side of this guide so as to apply to the guide an electric field perpendicular to the surface of the substrate (402) which makes it possible to obtain a symmetric/antisymmetric switching between the two modes of propagation inside the guide.

5. Device according to any one of Claims 1 to 4, characterized in that the means for later converting the antisymmetric mode into the symmetric mode comprise two optical transmission guides (432, 433) which are substantially parallel over a length $L_2$ and are separated by a distance $D_2$ which does not allow the coupling of the two guides and two electrodes (434, 435) extending on the surface of these guides and which are capable of being supplied with a DC electric voltage $V_0$ allowing the application to the guides of an electric field perpendicular to the surface of the substrate (402).

6. Device according to any one of Claims 1 to 4, characterized in that the means for later converting the antisymmetric mode into the symmetric mode comprise an asymmetric junction with two exits of different width (742, 743) and in which the antisymmetric mode emerges from the narrower guide.

7. Device according to any one of Claims 1 to 4, characterized in that the means for later converting the antisymmetric mode into the symmetric mode comprise two X-shaped crossed guides (932, 933) and two electrodes (901, 902) situated at this crossover point so as to receive a control voltage $V_1$ which enables the symmetric mode to be directed into just one of these guides (933).

8. Device according to any one of Claims 1 to 7, characterized in that it comprises means (451-454) connected to each end of the microwave propagation line formed by the electrodes deposited on the substrate (424, 425) in order to supply this line with a countertravelling wave and/or a cotravelling wave.

9. Device according to any one of Claims 1 to 7, characterized in that it comprises means (455-457) for supplying the electrodes (464, 465, 474, 475) simultaneously with the microwave signal at the frequency F and with a DC electric voltage $V_0$ allowing the varying of the coupling between the two guides and consequently the operating frequency of the device.

10. Single sideband optical modulator which comprises a device (153) according to any one of Claims 1 to 9.

**Patentansprüche**

1. Optische Frequenzumsetzungsvorrichtung mit, integriert auf einem Substrat (402) aus elektrooptischem Material, zwei Lichtwellenleitern (422, 423), die über eine Länge L1 im wesentlichen parallel zueinander und in einem Abstand d1 voneinander verlaufen, Mitteln (411 bis 413) zum Einführen einer optischen Anfangswelle mit der Frequenz $\nu$ in die zwei Leiter im symmetrischen Modus und wenigstens zwei Elektroden (424, 425), die sich über die Strecke L1 längs der Leiter erstrecken, um eine Höchstfrequenz-Übertragungsleitung zu bilden, die durch eine charakteristische Impedanz (403) zu einer Schleife geschaltet ist und durch ein Höchstfrequenzsignal mit einer Frequenz F gespeist werden kann, dadurch gekennzeichnet, daß der Wert von d1 eine optische Kopplung zwischen den zwei Leitern (422, 423) ermöglicht und daß die Werte von L1, d1 und F einen Übergang der übertragenen optischen Welle vom symmetrischen Modus in den antisymmetrischen Modus mit einer Frequenzumsetzung der optischen Welle im antisymmetrischen Modus ermöglichen, damit diese optische Welle eine Frequenz hat, die gleich einem der zwei Werte $\nu$ + F oder $\nu$ - F ist, und daß die Vorrichtung ferner Mittel (432, 435) zum anschließenden Überführen des antisymmetrischen Modus der in der Frequenz verschobenen optischen Welle in einen symmetrischen Modus enthält, so daß auf diese Weise die Wirkungen der Gegenphasigkeit zwischen den sich in den zwei Leitern ausbreitenden Wellen vermindert werden, um am Ausgang ein optisches Signal erhalten zu können, das eine Frequenz hat, die gleich einem der zwei Werte $\nu$ + F oder $\nu$ - F ist.

2. Vorrichtung nach Anspruch 1, dadurch gekennzeichnet, daß sie nur zwei Elektroden (424, 425) aufweist und daß sich diese über die Strecke $L_1$ über den Leitern erstrecken, damit an diese ein elektrisches Feld senkrecht zur Oberfläche des Substrats angelegt wird.

3. Vorrichtung nach Anspruch 1, dadurch gekennzeichnet, daß sie drei Elektroden enthält, von denen eine (114) auf der Oberfläche des Substrats zwischen den zwei Leitern (422, 423) angeordnet ist, während die zwei anderen (115, 125) auf der einen bzw. der anderen Seite der zwei Leiter (422, 423) angeordnet sind, so daß an diese zwei Leiter ein elektrisches Querfeld angelegt wird.

4. Vorrichtung nach Anspruch 1, dadurch gekennzeichnet, daß die zwei Leiter zu einem einzigen im Doppelmodus arbeitenden Leiter zusammengeführt sind, der eine auf diesem Doppelmodusleiter angeordnete Mittelelektrode (124) sowie zwei beiderseits dieses Leiters angeordnete seitliche Elektroden (135, 145) aufweist, um an den Leiter ein elektrisches Feld senkrecht zur Oberfläche des Substrats (402) anzulegen, das ermöglicht, einen Übergang symmetrisch/antisymmetrisch zwischen den zwei Ausbreitungsmoden im Inneren des Leiters zu erzielen.

5. Vorrichtung nach einem der Ansprüche 1 bis 4, dadurch gekennzeichnet, daß die Mittel zum anschließenden Konvertieren des antisymmetrischen Modus in den symmetrischen Modus zwei Lichtwellenleiter (432, 433) aufweisen, die über eine Länge $L_2$ im wesentlichen parallel zueinander verlaufen und durch einen Abstand $D_2$ voneinander getrennt sind, der keine Kopplung der zwei Leiter zuläßt, und ferner zwei Elektroden (434, 435) aufweist, die sich auf der Oberfläche dieser Leiter erstrecken und mit elektrischen Gleichspannung $V_0$ gespeist werden können, die erlaubt, an die Leiter ein elektrisches Feld senkrecht zur Oberfläche des Substrats (402) anzulegen.

6. Vorrichtung nach einem der Ansprüche 1 bis 4, dadurch gekennzeichnet, daß die Mittel zum anschließenden Konvertieren des asymmetrischen Modus in den symmetrischen Modus eine asymmetrische Zusammenführung mit zwei Ausgängen (742, 743) unterschiedlicher Breite aufweisen, in der der antisymmetrische Modus aus dem engsten Leiter kommt.

7. Vorrichtung nach einem der Ansprüche 1 bis 4, dadurch gekennzeichnet, daß die Mittel zum anschließenden Konvertieren des antisymmetrischen Modus in den symmetrischen Modus zwei in X-Form gekreuzte Leiter (932, 933) und zwei Elektroden (901, 902) aufweisen, die an diesem Kreuzungspunkt angeordnet sind, um eine Steuerspannung $V_1$ zu empfangen, die es ermöglicht, den symmetrischen Modus in einen der Leiter (933) zu lenken.

8. Vorrichtung nach einem der Ansprüche 1 bis 7, dadurch gekennzeichnet, daß sie Mittel (451 bis 454) enthält, die mit jedem Ende der Höchstfrequenz-Übertragungsleitung verbunden sind, die von den auf dem Substrat angebrachten Elektroden (424, 425) gebildet ist, mit denen diese Leitungen mit einer kontraprogressiven und/oder einer koprogressiven Welle gespeist werden kann.

9. Vorrichtung nach einem der Ansprüche 1 bis 7, dadurch gekennzeichnet, daß sie Mittel (455 bis 457) zum gleichzeitigen Speisen der Elektroden (464, 465, 474, 475) mit einem Höchstfrequenz-Signal mit der Frequenz F und einer elektrischen Gleichspannung $V_0$ enthalten, womit die Kopplung zwischen den zwei Leitern und folglich der Betriebsfrequenz der Vorrichtung verändert werden kann.

10. Optischer Einseitenband-Modulator, der eine Vorrichtung (153) nach einem der Ansprüche 1 bis 9 enthält.

FIG_1

FIG_2

FIG_3

FIG.4

FIG.5

FIG.6

FIG.7

FIG. 9

$V(t,F)$

## FIG_10

$V(t,F)$

## FIG_11

$V(t)e^{j2\pi Ft}$

$V_0$

$E_1 sin[aV(t)]e^{j2\pi(V+F)t}$

$154$

$(E_1 E_2)^{1/2} sin[AV(t)]e^{j2\pi Ft}$

$155$

$E_2 e$

## FIG_12

FIG_13

FIG_8